# EUROPEAN PATENT APPLICATION

(11) **EP 4 506 482 A1**
(43) Date of publication of application: **12.02.2025**
(21) Application number: 22940663.2
(22) Date of filing: 10.05.2022
(51) Int. Cl.: C22C 38/02

(54) **HIGH-CARBON STEEL WIRE ROD HAVING DUAL COMPLEX PHASE STRUCTURE AND MANUFACTURING METHOD THEREFOR**

(30) Priority: 06.05.2022 CN 202210488681
(71) Applicant: Angang Steel Company Limited, Anshan, Liaoning 114003 (CN)
(72) Inventor: GUO, Dayong, Anshan, Liaoning 114021 (CN); CHE, An, Anshan, Liaoning 114021 (CN); GAO, Hang, Anshan, Liaoning 114021 (CN); LIU, Leigang, Anshan, Liaoning 114021 (CN); YUAN, Ye, Anshan, Liaoning 114021 (CN); WANG, Hongliang, Anshan, Liaoning 114021 (CN); ZHANG, Haoxing, Anshan, Liaoning 114021 (CN); WANG, Bingxi, Anshan, Liaoning 114021 (CN); MA, Liguo, Anshan, Liaoning 114021 (CN); PAN, Yang, Anshan, Liaoning 114021 (CN)
(74) Representative: Murgitroyd & Company
(86) International application number: PCT/CN2022/091893
(87) International publication number: WO 2023/212969

(57) **Abstract**

The present invention provides a high-carbon steel wire rod having a dual complex phase structure and a manufacturing method therefor. The present invention comprises the components in percentage by mass: 0.60%-0.65% of C, 0.15%-0.25% of Si, 0.47%-0.58% of Mn, 0.0030%-0.015% of P, 0.0020%-0.015% of S, 0.0015%-0.0060% of N, 0.01%-0.04% of Cr, 0.01%-0.04% of Ni, 0.01%-0.04% of Cu, 0.0008%-0.005% of As, 0.0001%-0.0005% of Sn, 0.0001%-0.0005% of Ti, 0.0008%-0.0020% of total oxygen, 0.0001%-0.0015% of acid-solube aluminum, and balance of Fe and inevitable impurities. The high-carbon steel wire rod provided in the present invention is combined with a corresponding production process to form a dual complex phase structure having a pearlite lamellar structure and a pellet structure, an automobile control wire having a monofilament diameter of 0.14 m is manufactured, a fatigue life of at last 20,000 times is achieved, and the wire rod meets quality requirements of safely components such as a high-level automobile control wire of a user.

## Description

### TECHNICAL FIELD

The present invention relates to the field of wire rod products, and particularly relates to a high-carbon steel wire rod having a dual complex phase structure and a manufacturing method therefor.

### BACKGROUND

High-carbon steel wire rods used for manufacturing steel wire cords, bead wires, automobile control wires, elevator ropes and the like need to have higher strength and excellent service performance to meet safe operation requirements for mechanical equipment including automobiles. These wire rods are of fine pearlite structure, and lamellar structure of the fine pearlite structure can improve the tensile strength of wire rods. Fine pearlite lamellas gradually refine in a drawing process of wire rods, dislocation density in ferrite gradually increases, and strength of the steel wire increases. An excessively high dislocation density can easily develop into microscopic cracks, reducing drawability and service performance of wire rods. Therefore, for the chemical composition design and structure design of the wire rod, it is necessary to consider the requirements of the strength and service performance of wire rods to satisfy the quality requirements of users.

Application (patent) No. CN202110301478.8 relates to a SWRH82B high-carbon steel wire rod and a preparation method therefor, belonging to the technical field of steel wire rod materials. In order to solve the problems of high amount of aluminum oxide inclusions, low purity of liquid steel and poor component uniformity in existing production processes of the SWRH82B high-carbon steel wire rods. The application provides a SWRH82B high-carbon steel wire rod and a preparation method therefor, including processes of primary smelting, LF refining, continous casting, hot rolling, and controlled cooling. According to this application, qualified SWRH82B wire rods are finally rolled through production control of primary smelting furnace, control of refining slag system and reasonable continuous casting process parameters. The whole process of this application is subjected to aluminum-free deoxidation, so that the purity of the liquid steel is higher, and the obtained liquid steel and a casting blank meet the requirements of purity and component uniformity. This application has the advantages of high efficiency, low cost, low-power segregation index of the obtained casting blank within 1.05, a wire rod net carbon lower than or equal to grade 2, and a martensite less than or equal to 1.5, which can satisfy the use requirement for drawing.

The key point of the above patent application is to optimize the production process of wire rods, so as to achieve the purpose of improving the drawability of wire rods, but it does not consider the fatigue life of the metal product made of wire rods.

### SUMMARY

In view of the above technical problems, the present invention provides a high-carbon steel wire rod having dual complex phase structure and a manufacturing method therefor. The present disclosure is designed from two aspects of chemical composition and structure state, and provides a high-carbon steel wire rod having dual complex phase structure, so that the fatigue life quality of automobile control wire made of the wire rod meets the requirements of users. The present disclosure adopts the following technical solutions:

A high-carbon steel wire rod having dual complex phase structure includes the following chemical components in percentage by mass:
0.60%-0.65% of C, 0.15%-0.25% of Si, 0.47%-0.58% of Mn, 0.0030%-0.015% of P, 0.0020%-0.015% of S, 0.0015%-0.0060% of N, 0.01%-0.04% of Cr, 0.01%-0.04% of Ni, 0.01%-0.04% of Cu, 0.0008%-0.005% of As, 0.0001%-0.0005% of Sn, 0.0001%-0.0005% of Ti, 0.0008%-0.0020% of total oxygen, 0.0001%-0.0015% of acid-soluble aluminum, and a balance of Fe and inevitable impurities. The dual complex phase structure is a dual complex phase structure of pearlite lamellar structure and pearlite pellet structure. The pearlite lamellar structure includes small lamellar spacing pearlite and large lamellar spacing pearlite, and the pearlite pellet structure includes coarse pearlite pellet and fine pearlite pellet.

Further, a mass sum of Ni, Cu and Cr accounts for 0.04%-0.10% of the total mass.

The present invention enables the wire rod to be composed of large lamellar spacing pearlite and small lamellar spacing pearlite through designs of chemical composition and cooling process. The large lamellar spacing pearlite can reduce the stress concentration of the wire rod in a drawing process, prevent a drawing fracture caused by dislocation concentration in the ferrite and improve the drawability of wire rods and the fatigue life of metal products thereof. The small lamellar spacing pearlite can ensure that the strength of steel wire meets the requirements of users. The said small lamellar spacing pearlite and large lamellar spacing pearlite constitute a complex phase structure of the wire rod in nano-scale, which makes the wire rod have excellent comprehensive properties.

Too small pearlite lamellar spacing of wire rod will make the dislocation density in the ferrite structure too high during the drawing process of wire rod, which is easy to form microscopic cracks, thereby leading to drawing fractures of the wire rod. Too large pearlite lamellar spacing of wire rod cannot meet the requirements of user for the tensile strength of steel wires. In actual production processes of wire rods, in order to ensure that the pearlite lamellar spacing meets a control range, it is necessary to control a median of the pearlite lamellar spacing of wire rod within a certain range, in which the wire rods have a stable drawability. In order to make the wire rod form complex phase structure in nano-scale, it is necessary to control the standard deviation of lamellar spacing of the wire rod within a certain range. Too small standard deviation will make the difference of the lamellar spacing of the wire rod too small, which cannot meet the comprehensive requirements of drawability of the wire rod, fatigue life of wire rod products and tensile strength of steel wires. Too large standard deviation of lamellar spacing of the wire rod will make the difference of wire rod structure too large, and easily lead to wire rod drawing fracture. Therefore, according to the present disclosure, the pearlite lamellar spacing of the wire rod is controlled to be 0.18-0.26 µm, a median thereof is controlled to be 0.20-0.25µm, and a standard deviation is controlled to be 0.015-0.035.

The present invention enables the wire rod structure to be composed of coarse pearlite pellets and fine pearlite pellets through designs of chemical composition, heating process, rolling process and cooling process. The coarse pearlite pellets can improve the coordinated deformability of the wire rod in a drawing process, and improve the drawability of the wire rod and the fatigue life of the metal products thereof. The fine pearlite pellets can make the steel wire prepared by the wire rods meet the tensile strength requirements. The said coarse pearlite structure and fine pearlite structure constitute a complex phase structure of the wire rod in nano-scale, which makes the wire rod have excellent comprehensive properties.

Too small pearlite pellet size of wire rod will make the work-hardening of the wire rod drawing process significant, which is easy to cause drawing fractures of the wire rod. Too large pearlite pellet size of wire rod cannot meet the requirements of users for the tensile strength of steel wires. In actual production processes of wire rods, in order to ensure that the pearlite pellet size meets a control range, it is necessary to control a median of the pearlite pellet size within a certain range, in which the wire rods have a stable processing performance. In order to make the wire rod form complex phase structure in micron-scale, it is necessary to control the standard deviation of pearlite pellet size of the wire rod within a certain range. Too small standard deviation will make the difference of the pellet size of the wire rod too small, which cannot meet the comprehensive requirements of drawability of the wire rod, fatigue life of wire rod products and tensile strength of steel wires. Too large standard deviation of pearlite pellet size of the wire rod will cause stress concentration in the drawing process of the wire rod, and easily lead to wire rod drawing fracture. Therefore, according to the present disclosure, the pearlite pellet size of the wire rod is controlled to be 19-53 µm, a median thereof is controlled to be 28-41 µm, and a standard deviation thereof is controlled to be 3.9 -12.

The present disclosure enables the high-carbon steel wire rod forms a dual complex phase structure having pearlite lamellar structure and pellet structure, meeting the quality requirement of users for the fatigue life of metal products.

Selection principles and content design reasons of each chemical component in the present disclosure are as follows:
C: C in the wire rod is used to control the strength of the wire rod and product thereof, a too low C content cannot meet strength requirements of the steel wire of users, and an excessive C content will reduce the processing performance of the wire rod. Therefore, the C content in the present disclosure is controlled to be 0.60%-0.65%.
Si: Si is a ferrite strengthening element, which can increase the dislocation density during a drawing process of the steel wire, increase the strength of the steel wire, easily lead to the occurrence of microscopic cracks in the structure during the steel wire processing process, reduce the drawability of the wire rod, and deteriorate the fatigue life of the wire rod finished product. Si can improve the eutectoid transition temperature of the wire rod, which is advantageous for improving the difference of the wire rod structure, and improves the drawability and service performance of the wire rod. Si is also a main deoxidizing element in high-carbon steels, making the total oxygen content of the wire rod meet the requirements of users. If the total oxygen content of the wire rod is too high, the fatigue life of the wire rod finished product cannot meet the requirements of users, and therefore it is necessary to maintain a certain Si content in the steel. Therefore, the Si content in the present disclosure is controlled to be 0.15%-0.25%.
Mn: Element Mn has the effect of reducing the eutectoid transition temperature of steels, which can refine the wire rod structure. However, an excessive Mn content will enhance the work-hardening phenomenon during the wire rod drawing process, which is detrimental to improving the cold processability of the wire rod. Therefore, the Mn content in the present disclosure is controlled to be 0.47%-0.58%.
P: P is a harmful element in steel and is prone to phosphorus segregation. Severe phosphorus segregation will reduce the fatigue life of the wire rod finished product, and therefore its content should not be too high. However, maintaining a certain amount of P in the steel is advantageous for improving the difference of the wire rod structure, and improves the drawability and service performance of the wire rod. The P content in the present disclosure is controlled to be 0.0030%-0.015%
S: Sulfides in steel has good deformability and can play a role in reducing the harms of other inclusions in the steel. Meanwhile, element S may play a role in improving the difference of the wire rod structure, improving the drawability and service performance of the wire rod. However, an excessive S content in the steel tends to cause interfacial separation between inclusions and matrix structure of the wire rod, which in turn may deteriorate the drawability and service performance of the wire rod. Therefore, the S content in the present disclosure is controlled to be 0.0020%-0.015%.
N: Element N in steel may reduce the drawability of the wire rod and needs to be controlled to a lower level. However, element N can play a role in inhibiting the decomposition of cementite, improve the service performance of automobile control wires, and enhance the stability of wire rod finished products during service process. The N content in the present disclosure is controlled to be 0.0015%-0.0060%.
Cr: Element Cr in steel may play a role in refining the pearlite lamellar spacing and improving the tensile strength of the wire rod. However, an excessive Cr content will cause significant work-hardening duruing the wire rod drawing process and reduced processability. Therefore, the Cr content in the present disclosure is controlled to be 0.01%-0.04%.
Ni: Element Ni does not form carbides with carbon in steels. The presence of Ni in ferrite and austenite may refine ferrite grains and reduce the ductile-brittle transition temperature of steels. However, element Ni in steels may change the phase-transition temperature of the wire rod and the steel wire, causing fluctuations of strength of the steel wire, which need to be controlled. Therefore, the Ni content in the patent disclosure is controlled to be 0.01%-0.04%.
Cu: Element Cu may increase the strength of the wire rod and the steel wire, making the strength of the wire rod and the steel wire meets the requirements of users. However, element Cu may change the phase-transition temperature of the wire rod and the steel wire, causing the fluctuations of processability of the steel wire after heat treatment, and therefore, the Cu content should not be too high. Therefore, the Cu content in the present disclosure is controlled to be 0.01% -0.04%.

In order to achieve the above-mentioned effects of Ni, Cr and Cu, a preferred mass sum of Ni, Cr and Cu is 0.04%-0.10%.

As: As tends to enrich at grain boundaries in steel, reduce system energy and stabilize austenite. However, an excessive As content in the steel will reduce the drawability of the wire rod and the fatigue life of the wire rod finished metal products. Therefore, the As content in the present disclosure is controlled to be 0.0008%-0.005%.

Sn: Sn tends to segregate at grain boundaries in steel, which may stabilize austenite. At the same time, the Sn segregated at grain boundaries will reduce the performance of the steel, so the Sn content in the steel needs to be controlled within a certain range. The Sn content in the present disclosure is controlled to be 0.0001%-0.0005%.

Ti: Element Ti in steel tends to form titanium nitride inclusions with element N, worsening the drawability and service performance of the wire rod. However, appropriate amounts of Ti and N form fine nitrides that may play a role in inhibiting microcrack propagation in the drawing and service processes of the wire rod. The Ti content in the present disclosure is controlled to be 0.0001%-0.0005%.

Acid soluble aluminum in steel may control the melting point of the inclusions, making the inclusions deformable and reducing the adverse effects of inclusions on the drawing and stranding of wire rods. An excessive acid-soluble aluminum content will form large scale aluminum oxide inclusions in the steel, reducing the drawability and service performance of the wire rod. The content of acid-soluble aluminum in the present disclosure is controlled to be 0.0001%-0.0015%.

Excessive oxygen content in the wire rod will reduce the drawing and stranding performances of the wire rod. However, a too low oxygen content adversly affects the control of inclusions and increases the wire breaking rate in the wire rod drawing and stranding process. Therefore, the oxygen content in the present disclosure is controlled to be 0.0008% -0.0020%.

In order to achieve the objective of the present disclosure, a technical solution is further disclosed, that is, a method for manufacturing the high-carbon steel wire rod having dual complex phase structure. The method includes processing steps of converter smelting, secondary refining, continuous casting and continuous rolling, billet steel heating, wire rod rolling, and wire rod cooling. The present disclosure adopts main processing steps as follows:
1) Smelting: Melted iron and scrap steel are used for converter smelting, and an addition amount of the scrap steel accounts for 2%-8%. ANi content in the scrap steel is 0.01%-0.06%, a Cr content is 0.01%-0.08%, and a Cu content is 0.01%-0.06%. The above trace elements in the scrap steel make the residual elements content in the liquid steel meets the requirements. The liquid steel is subjected to refining treatment by an LF furnace after converter smelting. a treatment temperature of the liquid steel in the LF furnace is 1510-1580 °C, and a refining time is 30-40 minutes. The refining process is provided with argon stirring with an argon flow of 300-500 NL/min, promoting the chemical composition of the liquid steel uniform and promoting the large particle inclusions to float up and discharge from the liquid steel. An oxygen activity in the refining process is controlled to be 10-30 ppm, the S content is controlled to be 0.0020%-0.013%, and the content of nitrogen and other elements in the liquid steel is controlled by using surface-active elements of O and S.
2) Continuous bloom casting: The liquid steel is subjected to continuous casting after refining. A cross-section size of the continuous casting billet is (200-300) mm×(300-400) mm, a cooling intensity of the continuous bloom casting for secondary cooling is 0.2-0.4 m3/(h*t), a superheat degree of the continuous casting tundish is less than or equal to 25°C, a current intensity of the crystallizer in electromagnetic stirring process during the continuous casting process is 300 A-450 A, and an electromagnetic stirring frequency is 1 Hz-3 Hz. An equiaxed crystal zone of the continuous casting billet accounts for 25%-35% of the entire cross-section (equiaxed crystal zone + columnar crystal zone), and a C segregation index at the boundary of the columnar crystal and the equiaxed crystal of the continuous casting billet is 0.90-1.05. The drawing fracture of the wire rod caused by the segregation at the boundary of the columnar crystal and the equiaxed crystal is reduced by the above-mentioned casting billet segregation control.
3) Continuous bloom rolling: A total heating time is 3.5-4.3 h, a soaking zone temperature is controlled to be 1180-1240°C, and a holding time of the soaking zone is controlled to be 40-60 min, which lays foundation for controlling the wire rod structure. A cross-section size of the continuous rolling billet is (150-170) mm×(150-170) mm.
4) Heating of the continuous rolling billet steel: the billet after continuous rolling is heated at a heating speed is 13°C/min-18°C/min, a temperature of a soaking zone is 1055-1150°C, and a soaking time is 35-50 min. Segregation of elements such as C, Mn and S is reduced by means of high-temperature diffusion, and structure homogeneity of the rolling raw material of the wire rod is improved. An amount of residual oxygen in the heating furnace is 2%-8%, and an atmosphere in the heating furnace is micro-positive pressure with a pressure of 2-9 Pa. Maintaining oxidation in the heating furnace may prevent the reducing atmosphere from deteriorating the peeling property of the iron oxide scale on the surface of the billet steel, the decrease in the surface quality during the subsequent steel wire processing and the reduction in the service performance of the wired rod finished metal product.
5) Wire rod rolling: The billet steel after heating is tapped for high-pressure water descaling with a descaling pressure of not lower than 14 MPa, preventing the surface quality of the wire rod from deteriorating. The billet steel is subjected to wire rod spinning after rough rolling, intermediate rolling, pre-finish rolling and finish rolling. A finish rolling speed of the wire rod is 95-115 m/s, a pass area reduction in the finish rolling process is controlled to be 15%-25%, and a deformation rate is 700 s⁻¹ to 800 s⁻¹, which enables the size and distribution index of the pearlite pellet of the wire rod to meet the fatigue life requirement of automobile control wires, also lays a foundation for controlling the wire rod lamellar spacing. A spinning temperature of the wire rod is controlled to be 890-930°C, laying a foundation for controlling the final structure of the wire rod. A diameter of the wire rod is 5.0-6.0 mm.
6) Wire rod cooling: A cooling rate of the wire rod after spinning is controlled to be 7-15°C/s, a phase transformation time is controlled to be 15-25 s, and a phase transformation temperature is controlled to be 650-690°C, which lays a foundation for controlling the lamellar spacing and pellet size of the wire rod.

The present disclosure has the following advantages:
The present disclosure provides a high-carbon steel wire rod having dual complex phase structure. In the present disclosure, the wire rod is composed of a large lamellar spacing pearlite and a small lamellar spacing pearlite through designs of chemical composition design and cooling process. Large lamellar spacing pearlite may reduce the stress concentration of the wire rod in the drawing process, prevent drawing fracture caused by dislocation concentration in the ferrite, and improve the drawability of the wire rod and the fatigue life of the wire rod finished metal product. Small lamellar spacing pearlite may ensure that the strength of the steel wire meets the requirements of users. The above-mentioned small lamellar spacing pearlite and large lamellar spacing pearlite constitute a complex phase structure of the wire rod in nano-scale, making the wire rod have excellent comprehensive properties. According to the present disclosure, the wire rod structure is composed of coarse pearlite pellets and fine pearlite pellets through designs of chemical composition, heating process, rolling and cooling process. The coarse pearlite pellets can improve the coordinated deformability of the wire rod in a drawing process, and improve the drawability of the wire rod and the fatigue life of the metal products thereof. The fine pearlite pellets can make the steel wire prepared by the wire rods meet the tensile strength requirements. The said coarse pearlite structure and fine pearlite structure constitute a complex phase structure of the wire rod in nano-scale, which makes the wire rod have excellent comprehensive properties. A minimum diameter of a monofilament of the automobile control wire made from the wire rod of the present invention reaches 0.14 mm. The fatigue life of automobile control wires is tested by means of a repeated load fatigue test with a counter weight of 350 N. The test results show that the fatigue life of the automobile control wire reaches at least 20,000 times, and the quality of the wire rod meets the user's requirement for fatigue life of high-grade automobile control wire. Meanwhile, according to the present disclosure, trace elements are supplemented through scrap steel in the smelting process, saving the cost of additional smelting trace element metal is saved, reducing the carbon emission of additional smelting, and realizing reutilization of the scrap steel.

### DETAILED DESCRIPTIONS OF THE EMBODIMENTS

To make the objectives, technical solutions, and advantages of the present invention clearer, the following clearly and completely describes the technical solutions in the embodiments of the present invention. Apparently, the described embodiments are merely some rather than all of the embodiments. Based on the embodiments of the present invention, all the other embodiments obtained by those of ordinary skill in the art without inventive effort are within the protection scope of the present invention.

The chemical components and technological process of examples of the present disclosure are shown in Table 1.

**Table 1 Chemical components and technological process parameters of examples of the present disclosure**

| Item | C, % | Si, % | Mn, % | P, % | S, % | N, % |
|---|---|---|---|---|---|---|
| Example1 | 0.64 | 0.24 | 0.56 | 0.013 | 0.0067 | 0.0053 |
| Example2 | 0.62 | 0.20 | 0.49 | 0.0058 | 0.011 | 0.0038 |
| Example3 | 0.61 | 0.19 | 0.48 | 0.011 | 0.0042 | 0.0042 |
| Example4 | 0.63 | 0.17 | 0.53 | 0.0071 | 0.0092 | 0.0028 |
| Example5 | 0.62 | 0.21 | 0.55 | 0.0035 | 0.0033 | 0.0050 |

| Item | Ni, % | Cr, % | Cu, % | Ni+Cr+Cu, % | As, % | Sn, % |
|---|---|---|---|---|---|---|
| Example1 | 0.03 | 0.01 | 0.04 | 0.08 | 0.0009 | 0.0004 |
| Example2 | 0.04 | 0.02 | 0.02 | 0.08 | 0.0021 | 0.0002 |
| Example3 | 0.01 | 0.04 | 0.03 | 0.08 | 0.0013 | 0.0003 |
| Example4 | 0.02 | 0.03 | 0.04 | 0.09 | 0.0016 | 0.0001 |
| Example5 | 0.04 | 0.04 | 0.01 | 0.09 | 0.0011 | 0.0003 |

| Item | Total oxygen, % | Acid soluble aluminu m, % | Ti, % | Minimum value of lamellar spacing, µm | Maximum value of lamellar spacing, µm | Median of lamellar spacing, µm |
|---|---|---|---|---|---|---|
| Example1 | 0.0018 | 0.0011 | 0.0004 | 0.21 | 0.25 | 0.22 |
| Example2 | 0.0011 | 0.0003 | 0.0001 | 0.21 | 0.25 | 0.23 |
| Example3 | 0.0009 | 0.0009 | 0.0003 | 0.18 | 0.25 | 0.21 |
| Example4 | 0.0015 | 0.0005 | 0.0005 | 0.19 | 0.23 | 0.20 |
| Example5 | 0.0012 | 0.001 | 0.0003 | 0.21 | 0.26 | 0.23 |

| Item | Standard deviation of lamellar spacing | Minimu m value of pellet size, µm | Maximum value of pellet size, µm | Median of pellet size, µm | Standard deviation of pellet size | Scrap steel ratio, % |
|---|---|---|---|---|---|---|
| Example1 | 0.021 | 19.5 | 52.5 | 36 | 12 | 2 |
| Example2 | 0.016 | 29 | 39 | 33.5 | 4 | 7 |
| Example3 | 0.033 | 33.5 | 50 | 40.5 | 6.8 | 5 |
| Example4 | 0.018 | 25 | 34.5 | 28 | 3.9 | 6 |
| Example5 | 0.024 | 23.5 | 46 | 30 | 9.7 | 3 |

| Item | Refining time, min | Argon flow, NL/min | Oxygen activity in refining process, ppm | S content in refining process, % | Bloom size, mm*mm | Cooling intensity, m³/(h*t) |
|---|---|---|---|---|---|---|
| Example1 | 38 | 428 | 26 | 0.0062 | 280*380 | 0.31 |
| Example2 | 35 | 394 | 19 | 0.0098 | 280*380 | 0.30 |
| Example3 | 39 | 411 | 27 | 0.0035 | 280*380 | 0.30 |
| Example4 | 37 | 385 | 21 | 0.0077 | 280*380 | 0.31 |
| Example5 | 38 | 365 | 20 | 0.0032 | 280*380 | 0.31 |

| Item | Superheat degree,°C | Stirring current intensity, A | Stirring current frequency, Hz | Equiaxed crystal ratio, % | C segregation index | Total heating time of billet, h |
|---|---|---|---|---|---|---|
| Example1 | ≤25 | 400 | 2.0 | 29 | 1.05 | 4.1 |
| Example2 | ≤20 | 401 | 1.9 | 27 | 1.04 | 3.9 |
| Example3 | ≤23 | 398 | 1.9 | 29 | 0.92 | 4.2 |
| Example4 | ≤21 | 400 | 1.9 | 28 | 1.04 | 4.0 |
| Example5 | ≤19 | 399 | 2.0 | 28 | 0.95 | 3.9 |

| Item | Soaking temperature of billet, °C | Soaking time of billet, min | Size of continuous rolling billet, mm*mm | Heating speed of continuous rolling billet, °C /min | Soaking temperature of continuous rolling billet, °C | Soaking time of continuous rolling billet, min |
|---|---|---|---|---|---|---|
| Example1 | 1219 | 52 | 160*160 | 15 | 1145 | 45 |
| Example2 | 1220 | 45 | 160*160 | 17 | 1132 | 37 |
| Example3 | 1231 | 48 | 160*160 | 15 | 1103 | 38 |
| Example4 | 1194 | 50 | 160*160 | 16 | 1098 | 41 |
| Example5 | 1195 | 47 | 160*160 | 16 | 1132 | 44 |

| Item | Residual oxygen content in furnace, % | Furnace pressure, Pa | Descaling pressure, MPa | Finish rolling speed, m/s | Pass area reduction in finish rolling , % | Deformation rate in finish rolling, s⁻¹ |
|---|---|---|---|---|---|---|
| Example1 | 4 | 9 | 15 | 105 | 22 | 780 |
| Example2 | 7 | 7 | 16 | 105 | 22 | 778 |
| Example3 | 6 | 6 | 14 | 105 | 20 | 779 |
| Example4 | 8 | 5 | 15 | 105 | 21 | 781 |
| Example5 | 2 | 3 | 16 | 105 | 20 | 781 |

| Item | Spinning temperature, °C | Wire rod diameter , mm | Cooling speed, °C/s | Phase transformati on speed, s | Counter weight in fatigue test , N | Fatigue life of automobile control wire, ten thousand times |
|---|---|---|---|---|---|---|
| Example1 | 922 | 5.5 | 12 | 22 | 350 | 2.6 |
| Example2 | 898 | 5.5 | 13 | 21 | 350 | 2.4 |
| Example3 | 901 | 5.5 | 11 | 22 | 350 | 2.5 |
| Example4 | 913 | 5.5 | 12 | 20 | 350 | 2.6 |
| Example5 | 905 | 5.5 | 12 | 23 | 350 | 2.4 |

The wire rods produced in the examples were made into automobile control wires through a process including descaling, drawing, heat treatment, drawing, heat treatment, finish drawing and twisting. The minimum diameter of a monofilament of the automobile control wires made from the wire rods reaches 0.14 mm. The fatigue life of automobile control wires is tested by means of a repeated load fatigue test with a counter weight of 350 N. The test results show that the fatigue life of the automobile control wire reaches at least 20,000 times, and the quality of the wire rod meets the user's requirement for fatigue life of high-grade automobile control wire.

According to the present disclosure, meanings of the maximum value, minimum value, median, and standard deviation of the lamellar spacing and the pellet size of the pearlite are as follows :
Maximum value of the pearlite lamellar spacing: the maximum value of the pearlite lamellar thickness perpendicular to the observing surface measured by the vertical linear intercept method after etching a cross-section of a sample with a 4% nital.

The maximum value of the pearlite pellet size: the maximum equivalent diameter of pearlite pellets determined after etching a cross-section of a sample with a 4% nital.

The minimum value of the pearlite lamellar spacing: the minimum value of the pearlite lamellar thickness perpendicular to the observing surface measured by the vertical linear intercept method after etching a cross-section of a sample with a 4% nital.

The minimum value of the pearlite pellet size: the minimum equivalent diameter of the pearlite pellets determined after a cross-section of a sample with a 4% nital.

Median: refers to the value in the middle of the sequence of measurements of lamellar spacing and pellet size of pearlite.

Standard deviation: refers to the distribution of lamellar spacing and pellet size of pearlite to describe the degree of difference in microstructure size within the pearlite.

At last, it should be noted that the above various embodiments are merely intended to illustrate the technical solution of the present invention and not to limit the same; although the present invention has been described in detail with reference to the foregoing embodiments, it should be understood by those ordinary skilled in the art that the technical solutions described in the foregoing embodiments can be modified or equivalents can be substituted for some or all of the technical features therefor; and the modification or substitution does not make the essence of the corresponding technical solution deviate from the scope of the technical solution of each embodiment of the present invention.

## Claims

1. A high-carbon steel wire rod having dual complex phase structure, comprising the following chemical components in percentage by mass: 0.60%-0.65% of C, 0.15%-0.25% of Si, 0.47%-0.58% of Mn, 0.0030%-0.015% of P, 0.0020%-0.015% of S, 0.0015%-0.0060% of N, 0.01%-0.04% of Cr, 0.01%-0.04% of Ni, 0.01%-0.04% of Cu, 0.0008%-0.005% of As, 0.0001%-0.0005% of Sn, 0.0001%-0.0005% of Ti, 0.0008%-0.0020% of total oxygen, 0.0001%-0.0015% of acid-soluble aluminum, and a balance of Fe and inevitable impurities.

2. The high-carbon steel wire rod having dual complex phase structure according to claim 1, wherein the high-carbon steel wire rod forms a dual complex phase structure having pearlite lamellar structure and pearlite pellet structure.

3. The high-carbon steel wire rod having dual complex phase structure according to claim 1, wherein a pearlite lamellar spacing of the wire rod is 0.18-0.26 µm, a median thereof is 0.20-0.25 µm, and a standard deviation is 0.015-0.035; and
a pearlite pellet size of the wire rod is 19-53 µm, a median thereof is 28-41 µm, and a standard deviation thereof is 3.9-12.

4. The high-carbon steel wire rod having dual complex phase structure according to claim 1, wherein a mass sum of Ni, Cu and Cr accounts for 0.04%-0.10% of the total mass.

5. A method for manufacturing the high-carbon steel wire rod having dual complex phase structure of any one of claims 1 to 4, comprising process steps of smelting, continuous casting, continuous rolling, billet steel heating, wire rod rolling and wire rod cooling, wherein the process steps are as follows:
1) smelting process: the smelting process comprises converter smelting and secondary refining, wherein an oxygen activity in the refining process is controlled to be 10-30 ppm, and an S content is controlled to be 0.0020%-0.013%;
2) continuous casting process: a superheat degree of a continuous casting tundish is less than or equal to 25°C, a current intensity of a crystallizer in electromagnetic stirring process during the continuous casting process is 300-450A, an electromagnetic stirring frequency is 1-3Hz, an equiaxed crystal ratio of a continuous casting billet is 25%-35%, and a C segregation index at a boundary of columnar crystal and equiaxed crystal of the continuous casting billet is 0.90-1.05;
3) continuous rolling process: a total heating time is 3.5-4.3 h, a soaking zone temperature is controlled to be 1180-1240 °C, and a soaking time is 40-60 min;
4) billet steel heating process: the billet steel after continuous rolling is heated at a heating speed of 13-18 °C/min; a temperature of a soaking zone is 1055-1150 °C, and a soaking time is 35-50 min;
5) wire rod rolling process: the billet steel after heating is tapped for high-pressure water descaling with a descaling pressure of not lower than 14 MPa, and the billet steel is subjected to wire rod spinning after rough rolling, intermediate rolling, pre-finish rolling and finish rolling, with a wire rod spinning temperature controlled to be 890-930 °C; and
6) wire rod cooling process: a cooling rate of the wire rod after spinning is controlled to be 7-15 °C/s, and a phase transformation time is controlled to be 15-25 s.

6. The method according to claim 5, wherein in the smelting process, melted iron and scrap steel are adopted for converter smelting, wherein the scrap steel comprises Ni, Cr and Cu; a liquid steel is subjected to refining treatment through an LF furnace after converter smelting, wherein a treatment temperature of the liquid steel in LF furnace is 1510-1580 °C, a refining time is 30-40 minutes, and the refining process is provided with argon stirring with an argon flow of 300-500 NL/min.

7. The method according to claim 6, wherein in the smelting process, an addition amount of the scrap steel accounts for 2%-8%.

8. The method according to claim 5, wherein a continuous bloom casting and a continuous bloom rolling process are adopted,
specifically, in the continuous bloom casting, a cross-section size of the continuous casting billet is (200-300) mm×(300-400) mm, and a cooling intensity of the continuous bloom casting for secondary cooling is 0.2-0.4 m³/(h*t); and
in the continuous bloom rolling, a cross-section size of the continuous rolling billet is (150-170) mm×(150-170) mm.

9. The method according to claim 5, wherein in the billet steel heating process, an amount of residual oxygen in a heating furnace is 2%-8%, and an atmosphere in the heating furnace is micro-positive pressure with a pressure of 2-9 Pa.

10. The method according to claim 5, wherein in the rolling process of the wire rod, a finish rolling speed of the wire rod is 95-115 m/s, a pass area reduction in the finish rolling process is controlled to be 15%-25%, and a deformation rate is 700-800s⁻¹; and
a diameter of the wire rod obtained after rolling is 5.0-6.0 mm.
